# DEMANDE DE BREVET EUROPEEN

(11) **EP 4 050 807 A1**
(43) Date de publication de la demande: **31.08.2022**
(21) Numéro de dépôt: 22157883.4
(22) Date de dépôt: 22.02.2022
(51) Int. Cl.: H04B 5/00, H02J 7/02, H02J 50/12, H02J 50/80

(54) **CHARGEMENT NFC**

(30) Priorité: 25.02.2021 FR 2101862; 29.06.2021 FR 2106989
(71) Demandeur: STMicroelectronics (Rousset) SAS, 13790 Rousset (FR)
(72) Inventeur: CORDIER, Nicolas, 13080 AIX-EN-PROVENCE (FR); TORNAMBE, Anthony, 13790 ROUSSET (FR); QUIGNON, Jeremy, 83170 TOURVES (FR)
(74) Mandataire: Cabinet Beaumont

(57) **Abrégé**

La présente description concerne un dispositif (1) comprenant : un contrôleur NFC (26) ; un microcontrôleur (10) ; un circuit chargeur (34) d'une batterie externe ; un dispositif de récupération d'énergie (32) ; une antenne (22) ; et un commutateur (36), commandable par le contrôleur NFC (26), couplant le dispositif de récupération d'énergie (32) au circuit chargeur (34).

## Description

### Domaine technique

La présente description concerne de façon générale les dispositifs de communication en champ proche (Near Field Communication - NFC), tels que les dispositifs IdO (Internet des Objets) ou autres. La présente description concerne plus particulièrement la recharge sans fil (WLC) de ces dispositifs.

### Technique antérieure

Dans les dispositifs classiques, des antennes différentes sont utilisées pour les communications NFC et pour la recharge sans fil.

Plus récemment, on a essayé d'effectuer la recharge sans fil WLC à l'aide de la technologie NFC. Toutefois, les circuits usuels ne sont pas adaptés aux dispositifs de petites dimensions comme les dispositifs IdO.

### Résumé de l'invention

Il serait souhaitable de disposer d'une solution de recharge NFC adaptée aux petits dispositifs tels que les dispositifs IdO.

Un mode de réalisation pallie tout ou partie des inconvénients des solutions connues.

Un mode de réalisation prévoit un dispositif comprenant :
un contrôleur NFC ;
un microcontrôleur ;
un circuit chargeur d'une batterie externe ;
un dispositif de récupération d'énergie ;
une antenne ; et
un commutateur, commandable par le contrôleur NFC, couplant le dispositif de récupération d'énergie au circuit chargeur.

Un mode de réalisation prévoit un procédé d'utilisation d'un dispositif comprenant :
un contrôleur NFC ;
un microcontrôleur ;
un circuit chargeur d'une batterie externe ;
un dispositif de récupération d'énergie ;
une antenne ; et
un commutateur couplant le dispositif de récupération d'énergie au circuit chargeur,
dans lequel le commutateur est commandé par le contrôleur NFC.

Selon un mode de réalisation, ledit commutateur est dans un état ouvert pendant des communications NFC en mode lecteur ou en mode carte.

D Selon un mode de réalisation, ledit commutateur est dans un état fermé pendant des cycles de recharge sans fil.

Selon un mode de réalisation, le microcontrôleur génère un signal de commande à destination du circuit chargeur de façon à réguler le courant de charge.

Selon un mode de réalisation, ledit courant de charge est ajusté sur la base de l'énergie disponible du champ.

Selon un mode de réalisation, en présence d'un champ émis par un dispositif chargeur externe, au moins le contrôleur NFC et le circuit chargeur sont alimentés par le champ.

Selon un mode de réalisation, le microcontrôleur est également alimenté par le champ.

Selon un mode de réalisation, en présence d'un champ émis par un dispositif chargeur externe, tant que le niveau de charge de la batterie est inférieur à un seuil, le contrôleur NFC et/ou le microcontrôleur ne peuvent pas commuter en mode lecteur NFC.

Selon un mode de réalisation, en présence d'un champ émis par un dispositif chargeur externe, lorsque le niveau de charge de la batterie est supérieur à un seuil, le microcontrôleur et/ou le contrôleur NFC est alimenté par la batterie.

Selon un mode de réalisation, en présence d'un champ émis par un dispositif chargeur externe, dans lequel le contrôleur NFC entre en mode de veille pendant des cycles de charge.

Selon un mode de réalisation, en présence d'un champ émis par un dispositif chargeur externe, le microcontrôleur surveille la puissance disponible à l'entrée du circuit chargeur.

Selon un mode de réalisation, le commutateur est de type normalement ouvert.

Selon un mode de réalisation, lorsque le contrôleur NFC détecte un dispositif chargeur sans fil externe émettant un champ, il ferme le commutateur couplant le dispositif de récupération d'énergie au circuit chargeur.

Selon un mode de réalisation, le commutateur est de type normalement fermé.

Un mode de réalisation prévoit un dispositif comprenant :
un contrôleur NFC ;
un microcontrôleur ;
un chargeur de batterie ;
un dispositif de récupération d'énergie ;
une antenne ; et
un commutateur couplant le dispositif de récupération d'énergie au chargeur de batterie.

Un mode de réalisation prévoit un procédé de mise oeuvre du dispositif décrit, dans lequel le commutateur est commandé par le contrôleur NFC.

Selon un mode de réalisation, lorsque le contrôleur NFC détecte un émetteur (poller) de chargement sans fil émettant un champ, il ferme le commutateur couplant le dispositif de récupération d'énergie au chargeur de batterie.

Selon un mode de réalisation, le microcontrôleur génère un signal de commande à destination du chargeur de batterie de façon à réguler le courant de charge.

Selon un mode de réalisation, ledit courant de charge est ajusté sur la base de l'énergie disponible du champ.

Selon un mode de réalisation, en mode batterie off, l'état de défaut du commutateur est "on" de sorte que le chargeur est connecté au dispositif de récupération d'énergie.

Selon un mode de réalisation, en mode batterie off, au moins le contrôleur NFC et le chargeur de batterie sont alimentés par le champ.

Selon un mode de réalisation, le microcontrôleur est également alimenté par le champ.

Selon un mode de réalisation, tant que le niveau de la batterie est inférieur à un seuil, le chargeur demande au contrôleur NFC et/ou au microcontrôleur de rester en "mode statique".

Selon un mode de réalisation, lorsque le niveau de batterie est supérieur au seuil, la batterie alimente le microcontrôleur qui n'est plus alimenté par le champ à travers le chargeur.

Selon un mode de réalisation, pendant les phases de charge, le contrôleur NFC entre en mode de veille.

Selon un mode de réalisation, le contrôleur NFC surveille la puissance du signal reçu.

Selon un mode de réalisation, le microcontrôleur surveille la puissance disponible à l'entrée du chargeur.

Selon un mode de réalisation, si le champ descend en dessous d'un seuil, le microcontrôleur et le contrôleur NFC se réveillent et :
si une phase de charge se termine et qu'une phase de communication commence, le microcontrôleur effectue, via le contrôleur NFC, la communication pour négocier avec l'émetteur (poller), le protocole de recharge ; ou
s'il n'y a pas de champ disponible, la charge s'arrête.

Selon un mode de réalisation, un réglage d'un circuit d'adaptation qui comprend le dispositif est effectué alors que le commutateur est ouvert et que le dispositif de récupération d'énergie est "on".

Selon un mode de réalisation, le dispositif est configuré pour mettre en oeuvre le procédé décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un dispositif 1 adapté à exploiter des communications NFC et un rechargement NFC ;
les figures 2A et 2B illustrent, de façon très schématique et sous forme de blocs, des vues d'ensemble respectivement d'un système de communication NFC et d'un système de rechargement sans fil WLC ;
la figure 3 illustre, de façon schématique et sous la forme d'un chronogramme, un cycle de charge d'une batterie ;
la figure 4 représente, de façon plus détaillée qu'en figure 1, un mode de réalisation d'un dispositif adapté à exploiter des communications NFC et un rechargement WLC ;
la figure 5 illustre, de façon schématique, un état de l'architecture illustrée en figure 4 ;
la figure 6 illustre, de façon schématique, un autre état de l'architecture illustrée en figure 4 ;
la figure 7 illustre, de façon schématique, un autre état de l'architecture illustrée en figure 4 ;
la figure 8 illustre, de façon schématique, un autre mode de fonctionnement d'un dispositif selon l'architecture de la figure 4 ;
la figure 9 illustre, de façon schématique, un autre mode de fonctionnement d'un dispositif selon l'architecture de la figure 4 ; et
la figure 10 illustre, par un chronogramme, différents modes de fonctionnement ou états d'un dispositif selon l'architecture de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

De nombreux dispositif de communication en champ proche tels que des smartphones fonctionnant sur batterie peuvent également être rechargés à partir d'un champ électromagnétique. Le plus souvent ces dispositifs utilisent, pour les fonctions de chargement, une technologie différente de la technologie NFC (issue du NFC Forum), à savoir une technologie à plus basse fréquence, généralement connue sous le nom Qi. Cela requiert alors d'équiper le dispositif d'antennes et de circuits dédiées à chaque fonction.

Une telle solution est, pour des questions d'encombrement, inadaptée à des dispositifs de petites dimensions tels que les dispositifs généralement désignés IdO (Internet des Objets - Internet of Things - IoT).

Selon les modes de réalisation décrits, on prévoit des solutions permettant des communications en champ proche de type NFC et des fonctions de rechargement sans fil WLC de plus faible encombrement et compatibles avec des objets de petites dimensions. Par petites dimensions, on entend des objets devant intégrer, en plus de leur fonction propre (par exemple une montre, un capteur de température, etc.), des circuits NFC et de recharge dans un volume de moins d'un centimètre cube, de préférence compris entre 0,3 à 0,5 centimètre cube, encore plus préférentiellement de l'ordre de 0,4 centimètre cube.

On notera que, si les modes de réalisation sont plus particulièrement décrits en relation avec une application à des dispositifs de type IdO, ils s'appliquent plus généralement à tout type de dispositif NFC quelles que soient ses dimensions.

Le chargement sans fil en utilisant la technologie NFC est émergeant. Le NFC Forum définit, dans la section "chargement sans fil Forum NFC" (NFC Forum wireless charging) des critères de chargement sans fil, dit WLC, en utilisant la technologie NFC.

Selon les modes de réalisation décrits, un champ radiofréquence à 13,56 MHz est utilisé pour :
- les communications en champ proche NFC en mode lecteur et en mode carte ;
- le chargement sans fil WLC en mode chargeur ou en mode récepteur.

Les modes de réalisation décrits prévoient une nouvelle architecture de dispositif électronique adaptée à permettre à la fois des communications NFC et un chargement NFC (WLC), ainsi que des modes de fonctionnement permettant à la fois des communications NFC et un chargement NFC (WLC).

En prenant l'exemple d'un dispositif de type IdO, le chargement NFC peut être utilisé pour recharger le dispositif IdO avec un smartphone. Le dispositif IdO inclut, entre autres :
- un contrôleur NFC pour mettre en oeuvre des communications NFC en mode lecteur ou en mode carte (on parle généralement de mode hérité) et un protocole de chargement sans fil ;
- un chemin de chargement pour convertir le signal radiofréquence à 13,56 MHz reçu en un signal continu pour recharger une batterie via un circuit ou puce chargeur ;
- un microcontrôleur pour contrôler les échanges ou communications entre la puce chargeur et le contrôleur NFC, ainsi que, de préférence, avec les autres fonctions du dispositif IdO.

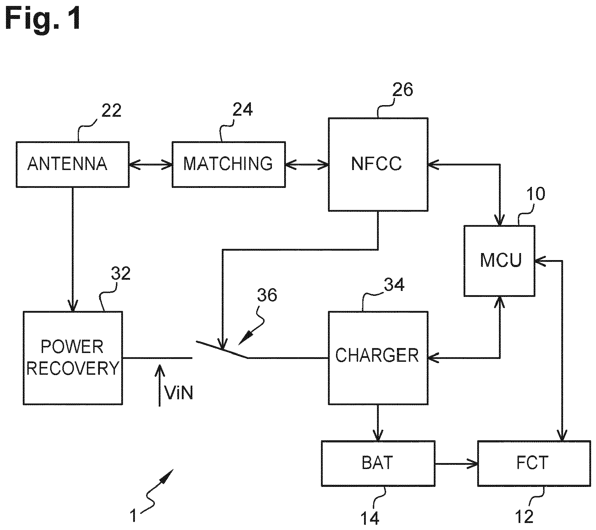

La figure 1 représente, de façon très schématique et sous forme de blocs, un mode de réalisation d'un dispositif 1 adapté à exploiter des communications NFC et un rechargement NFC.

Selon ce mode de réalisation, le dispositif 1 selon l'architecture proposée comporte un microcontrôleur 10 (MCU) dont le rôle est, entre autres, de construire (générer) les messages à transmettre, de fournir au reste du système des informations sur l'état de la charge de la batterie et les besoins en intensité de champ afin de mettre à jour des paquets de données dans un format connu sous l'acronyme NDEF (NFC Data Exchange Format). Le microcontrôleur communique notamment avec les circuits d'émission-réception NFC, les autres fonctions du dispositif 1, symbolisées par un bloc 12 (FCT) ainsi que les circuits de recharge d'une batterie 14 (BAT). Les circuits de recharge sont internes au dispositif 1. Dans un dispositif IoT, la batterie 14 est également interne au dispositif 1.

Les circuits d'émission-réception NFC ou chaîne de communication NFC comportent une antenne 22 (ANTENNA) reliée, par l'intermédiaire d'un circuit ou réseau d'adaptation d'impédance 24 (MATCHING), à un contrôleur NFC 26 (NFCC) ou tête de communication sans contact (CLF - ContactLess Front-end) chargé de mettre en forme les signaux reçus de l'antenne 22 pour le microcontrôleur 10 (ou directement pour d'autres fonctions du dispositif 1) et les données à émettre fournies par le microcontrôleur 10 (ou directement par d'autres fonctions du dispositif 1).

Selon les situations de fonctionnement, les circuits NFC tirent l'énergie nécessaire à leur fonctionnement de la batterie 14 ou directement du champ capté par l'antenne 22.

Selon les modes de réalisation décrits, les circuits de recharge exploitent la même antenne 22 que les circuits de communication NFC pour extraire de l'énergie d'un champ de recharge. Pour ce faire, un circuit de récupération d'énergie 32 (POWER RECOVERY) ou convertisseur alternatif/continu est relié, d'une part à l'antenne 22 et, par l'intermédiaire d'un commutateur 36, à un circuit chargeur 34 (CHARGER) de la batterie 14. Le circuit 32 convertit, à partir d'un champ radiofréquence, par exemple émis par un dispositif en mode chargeur, une tension continue VIN servant à alimenter, entre autres, le circuit chargeur 34. Le circuit 32 est, par exemple de façon simplifiée, constitué d'un pont de diodes. Le rôle du commutateur 36 est, comme cela sera détaillé par la suite, de déconnecter la branche de recharge, notamment lorsque le dispositif est en mode communication NFC.

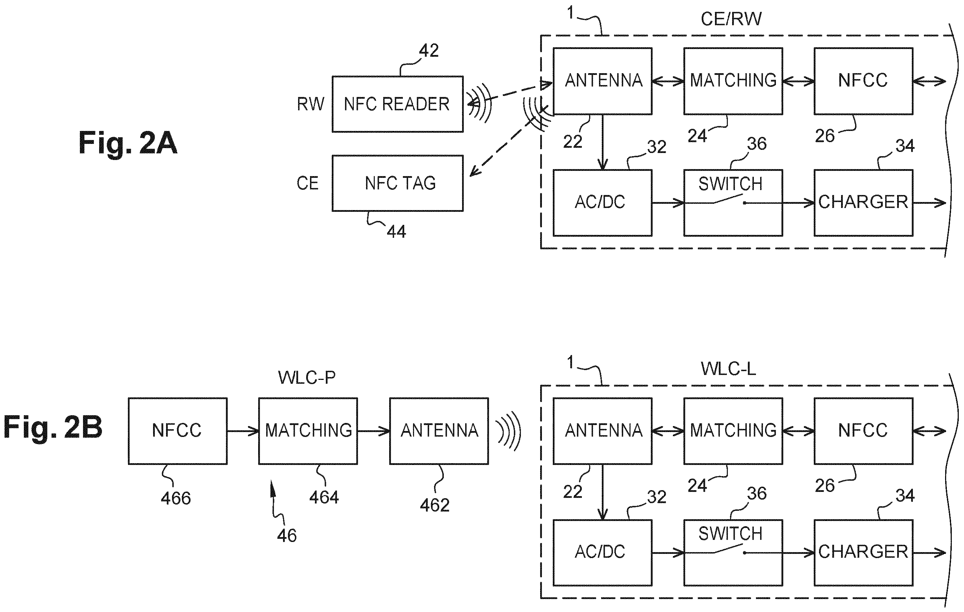

Les figures 2A et 2B illustrent, de façon très schématique et sous forme de blocs, des vues d'ensemble respectivement d'un système de communication NFC et d'un système de rechargement sans fil.

Dans les deux cas, le système utilise un dispositif 1 du type décrit en relation avec la figure 1, c'est-à-dire une architecture partageant une même antenne 22 et de préférence un même circuit de récupération d'énergie 32 entre une branche de communication NFC et une branche de recharge NFC.

Pour simplifier, tous les circuits du dispositif 1 n'ont pas été représentés en figure 2A et 2B. Seuls ont été représentés l'antenne 22, le circuit d'adaptation 24, le contrôleur NFC 26, le circuit de récupération d'énergie ou convertisseur alternatif/continu 32 (AC/DC), le commutateur 36 (SWITCH) et le circuit chargeur 34.

La figure 2A illustre les deux modes de fonctionnement (CE/RW) en communication NFC dans lesquels peut se trouver le dispositif 1.

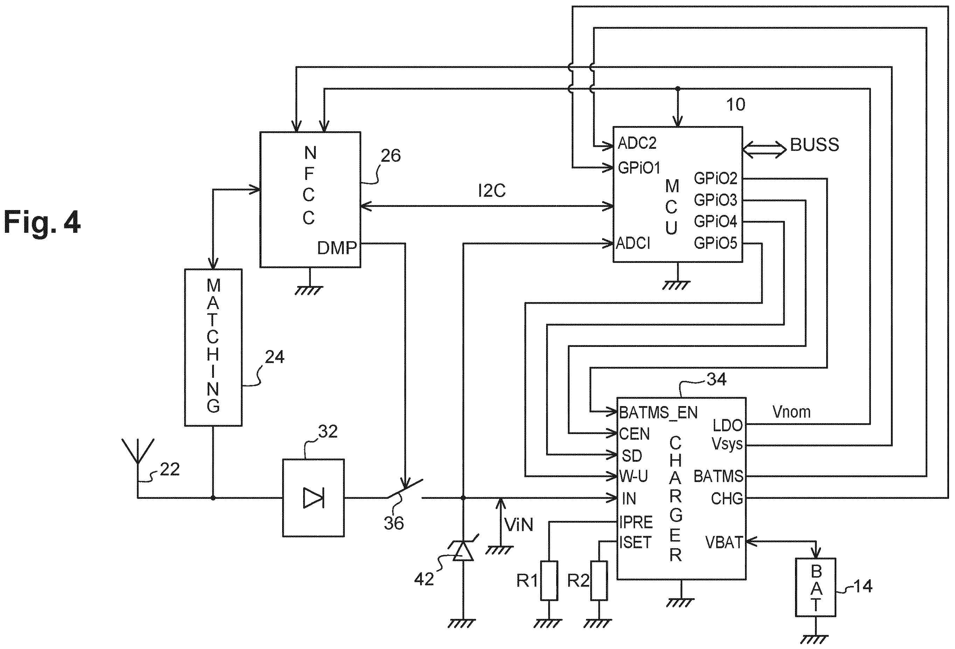

Le dispositif 1 peut opérer en mode carte, appelé également mode émulation carte (CE - Card Emulation), lorsqu'il se trouve à portée d'un dispositif 42 (NFC READER) d'émission d'un champ opérant en mode lecteur ou lecture/écriture (RW). Dans ce cas, le commutateur 36 est ouvert pour déconnecter la branche de recharge. La branche de communication NFC est active et le contrôleur NFC et les autres circuits sont alimentés par la batterie comme cela sera exposé plus en détail en relation avec la figure 4.

Le dispositif 1 peut également opérer en mode lecteur, également appelé lecture/écriture (RW). Il génère alors un champ radiofréquence à destination d'une étiquette 44 (NFC TAG) opérant en mode carte (CE). Le commutateur 36 est également ouvert pour déconnecter la branche de recharge. La branche de communication NFC est active et prélève l'énergie requise pour son fonctionnement de la batterie du dispositif 1.

La figure 2B illustre un mode de fonctionnement de recharge dans lequel le dispositif 1 est à portée d'un champ de chargement NFC émis par un dispositif 46 (WLC-P - WireLess Charging Poller) opérant en mode émetteur de chargement sans fil ou par un dispositif "chargeur" ou "poller". Le dispositif 46 est, par exemple, un smartphone destiné à charger un objet connecté (IdO). Le dispositif 46 étant configuré pour opérer un chargement sans fil de type NFC, il comporte, entre autres, un contrôleur NFC 466 (NFCC), un circuit d'adaptation d'impédance 464 (MATCHING) et une antenne 462 (ANTENNA). Côté dispositif 1, celui-ci opère en récepteur de chargement sans fil (WLC-L - WireLess Charging Listener) ou dispositif "récepteur" ou "listener", c'est-à-dire en dispositif à recharger. Dans cette configuration, le commutateur 36 est fermé afin de permettre au convertisseur 32 de fournir de l'énergie prélevée sur le champ rayonné par le dispositif chargeur 46 au circuit chargeur 34 pour recharger la batterie (non représentée en figure 2B). La branche de communication (en particulier le réseau 24 et le contrôleur 26) reste active, notamment pour déterminer que le dispositif distant est un dispositif chargeur et pouvoir ainsi fermer le commutateur 36 et, le cas échéant, établir le niveau de chargement en fonction des capacités du chargeur. En particulier, le dispositif 1 peut échanger avec le dispositif chargeur NFC 46 ses capacités de chargement sans fil dans un format d'échange de données NFC, connu sous l'acronyme NDEF (NFC Data Exchange Format), alors interprétable par le contrôleur NFC 26.

L'architecture décrite pour le dispositif 1 est compatible avec un fonctionnement usuel en communications NFC, que ce soit en mode carte ou en mode lecteur. Toutefois, afin d'éviter que la présence du chemin de charge ne perturbe les communications et, en particulier, engendre des pertes, le commutateur 36 est ouvert dès que le mode de fonctionnement est un mode de communication NFC, que ce soit en mode lecteur ou en mode carte.

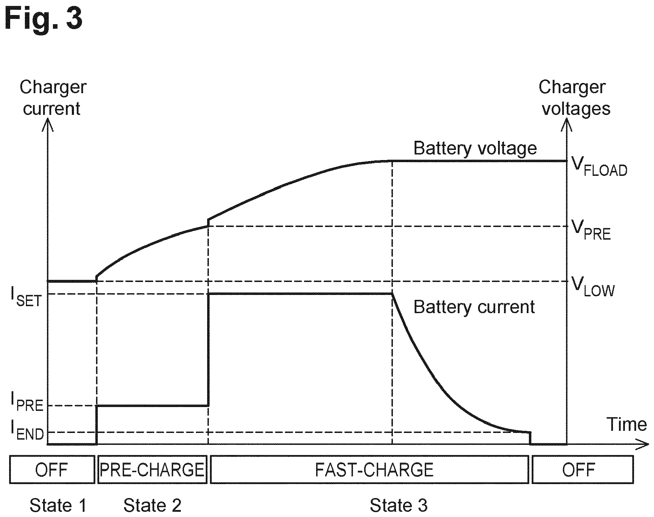

La figure 3 illustre, de façon schématique et sous la forme d'un chronogramme, un cycle de charge d'une batterie.

Le graphique de la figure 3 représente des exemples d'évolution du courant (Battery current) et de la tension (Battery voltage) côté batterie et indique le courant (Charger current) fourni par le circuit chargeur 34 et les tensions (Charger voltages) du circuit chargeur 34 en fonction du temps (Time) pour trois états différents (State 1, State 2, State 3).

L'état 1 (State 1) correspond à un état dans lequel le chargeur 34 est éteint (OFF). Cela peut correspondre également à un état dans lequel la batterie est éteinte, c'est-à-dire que sa charge n'est pas suffisante pour faire fonctionner les circuits du dispositif 1. Dans l'exemple de la figure 3, qui illustre un cycle de charge, l'état OFF (chargeur 34 ne fournissant pas d'énergie à la batterie) est présent alors que la batterie est déchargée (tension de batterie à un niveau VLOW). L'état OFF se retrouve également après une charge complète de la batterie. La tension de batterie est alors à un niveau VFLOAD et le courant de charge est nul.

L'état 2 (State 2) correspond à un état de précharge dans lequel niveau de tension de batterie est faible, c'est-à-dire inférieur à un seuil VPRE. Dans cet état, une étape de précharge (PRE-CHARGE) peut être mise en oeuvre avec un courant limité (IPRE) et sous une tension limitée (VPRE) afin de ne pas endommager la batterie.

L'état 3 (State 3) correspond à un état de charge rapide lorsque le niveau de tension de la batterie est suffisamment élevé, c'est-à-dire supérieur au seuil VPRE. Dans cet état, il est possible de mettre en oeuvre une étape de charge rapide (FAST-CHARGE) avec un courant constant (ISET) plus élevé, supérieur au courant IPRE et atteindre une tension VFLOAD ou maximale. Lorsque la batterie atteint la tension VFLOAD, le chargeur passe dans une phase à tension constante. Le courant de charge prélevé par la batterie sur le chargeur 34 décroît progressivement jusqu'à un niveau IEND pour lequel on considère que la charge est complète.

On revient alors dans un état où le chargeur est éteint (OFF), en ouvrant le commutateur 36 (courant de charge nul).

Dans les modes de mise en oeuvre et de réalisation décrits ci-après, on prévoit de tirer profit de la présence du commutateur 36 pour partager une même antenne 22 pour la recharge sans fil de la batterie 14 et pour les communications en champ proche.

La figure 4 représente, de façon plus détaillée qu'en figure 1, un mode de réalisation d'un dispositif 1.

Plus particulièrement, la figure 4 détaille certaines liaisons entre les circuits du dispositif 1 pour la mise en oeuvre des solutions décrites.

Pour simplifier, seules les liaisons utiles à la compréhension des fonctionnalités d'alimentation et de recharge ont été représentées et seront décrites. D'autres liaisons entre les circuits de la figure 4 et d'autres circuits non représentés du dispositif 1 existent mais n'ont pas été détaillées. Toujours par soucis de simplification, une même terminologie et référence seront parfois utilisées pour désigner un signal et une borne d'entrée à laquelle il est appliqué ou une borne de sortie fournissant ce signal.

Selon les modes de réalisation décrits, la même antenne 22 est reliée au réseau d'adaptation d'impédance 24 destiné aux communications NFC et au dispositif de récupération d'énergie 32, par exemple un pont redresseur associé en sortie à un condensateur de lissage (non représenté). On considère que ces liaisons définissent, arbitrairement, respectivement une branche de communication NFC et une branche de recharge sans fil.

Côté branche de recharge, la sortie du circuit de récupération d'énergie 32 est reliée, par l'intermédiaire du commutateur 36, à une borne IN d'entrée ou d'alimentation du chargeur 34. Un élément limiteur de tension 42, de façon simplifiée une diode Zener, limite (écrête) la tension redressée issue du dispositif 32 à une valeur VIN, par exemple de l'ordre de 6,0 volts, l'anode de la diode 42 étant côté masse. La tension VIN est également fournie sur une entrée ADC1 d'un convertisseur analogique-numérique du microcontrôleur 10 pour déterminer le niveau de la tension VIN et permettre, alors que le dispositif 2 est en mode WLC-L, qu'il régule la puissance fournie par le dispositif chargeur opérant en mode WLC-P en fonction de la tension VIN. Le cas échéant, la mesure est effectuée via un pont-diviseur de tension non représenté (le microcontrôleur est par exemple alimenté par une tension de l'ordre de 3 volts alors que la tension VIN peut atteindre typiquement de l'ordre de 6 volts).

Selon le mode de réalisation représenté, la diode 42 est en aval de l'interrupteur 36, de sorte qu'elle n'est reliée à l'antenne 22 qu'en mode de chargement de la batterie.

Le chargeur 34 reçoit des signaux de commande du microcontrôleur 10 et plus particulièrement un signal W-U (Wake-Up) de sortie de mode très basse consommation (typiquement de l'ordre de 10 nA souvent désigné shipping mode), un signal BATMS-EN d'activation du chargeur 34, un signal SD (ShutDown) de désactivation du chargeur pour passer en mode très basse consommation et un signal CEN pour réinitialiser la machine d'état du chargeur ou suspendre le chargement. Ces signaux sont fournis, par le microcontrôleur 10, depuis des bornes d'entrée/sortie à objet général (GPIO - General Purpose Input/Output) respectivement GPIO5, GPIO4, GPIO3 et GPIO2.

Le chargeur 34 fournit, sur des sorties d'énergie VBAT, Vsys et LDO, respectivement une tension à destination de la batterie, une tension système Vsys ayant soit la valeur VIN provenant du dispositif 32, soit la valeur VBAT fournie par la batterie 10, et une tension nominale Vnom régulée (par exemple, à 3,0 volts) à partir de l'énergie fournie par la batterie. La tension Vnom est, par exemple, fournie par un régulateur linéaire (LDO - Low Drop-Out) que comporte le chargeur 34. La borne VBAT est une borne d'entrée-sortie VBAT du chargeur 34 reliée à la batterie (à sa borne positive) pour la charger ou en prélever de l'énergie.

La tension Vnom est fournie, entre autres, au microcontrôleur 10 et au contrôleur NFC 26. La tension Vsys n'est fournie qu'au contrôleur NFC. Cette dissociation des tensions d'alimentation est principalement liée au fait que le régulateur linéaire LDO a une capacité limitée en courant (par exemple de l'ordre de 150mA) alors que le contrôleur NFC 26 peut nécessiter jusqu'à 400mA en mode lecteur, 200mA en mode carte. Par ailleurs, la tension de 3V fournie par le régulateur linéaire LDO limite les performances radiofréquence du contrôleur NFC. Etant donné que la tension Vsys correspond à la tension de batterie VBAT qui est alors supérieure à 3 volts lorsque le commutateur 36 est ouvert (pas de chargement en cours), les performances NFC sont meilleures. En revanche, il est nécessaire d'alimenter l'entrée VPSIO sur contrôleur NFC 26 avec le régulateur linéaire LDO car l'entrée VPSIO sert de référence de tension aux entrées-sorties GPIO et I2C connectées au microcontrôleur 10.

Le chargeur 34 fournit également, au microcontrôleur 10, des signaux BATMS et CHG.

Le signal BATMS correspond à la mesure de la tension de la batterie pour évaluer le niveau de charge. Pour ne pas surconsommer dans un pont diviseur (non représenté) connecté entre la borne BATMS et une borne ADC2 d'un convertisseur analogique-numérique du microcontrôleur 10, la mesure est activée par BATMS_EN (BATMS ne présente la tension batterie que si BATMS_EN est à 1).

Le signal CHG indique dans quelle étape se trouve la machine d'état du chargeur, typiquement VIN non valide / VIN valide / en charge / fin de charge / timeout de charge (au bout de 30mn de précharge ou 5h de charge rapide) / erreur surcharge / erreur de tension batterie faible (VBAT < VPRE) pendant la charge rapide / erreur surchauffe du chargeur / erreur surchauffe de la batterie. Les états sont codés par niveaux haut / bas du signal CHG à une fréquence de quelques Hertz. Le signal CHG est par exemple fourni, au microcontrôleur 10, sur une borne à objet général GPI01 (General Purpose Input/Output).

L'intensité du courant de charge de la batterie, entre le courant de précharge IPRE et le courant de charge rapide ISET est conditionnée par la connexion (interne au chargeur 34) d'une résistance R1, respectivement R2 reliant des bornes respectivement IPRE et ISET du chargeur 34 à la masse.

Côté branche de communication, le circuit d'adaptation d'impédance 24 est relié au contrôleur NFC 26. Le contrôleur NFC est relié au microcontrôleur 10 au moins par un bus bidirectionnel de type I2C permettant d'échanger des données reçues et à transmettre. Le contrôleur 26 fournit, sur une borne DMP, un signal de commande du commutateur 36 permettant de l'ouvrir ou de le fermer en fonction des conditions de fonctionnement.

Le microcontrôleur 10 échange des signaux avec d'autres circuits non représentés du dispositif 1. Un bus (BUS) symbolise les liaisons propres à ces échanges.

L'architecture décrite est adaptée à différents modes de réalisation et de mise en oeuvre.

En particulier, le fonctionnement et les commandes seront différentes selon que commutateur 36 est de type normalement ouvert ou normalement fermé. De préférence, le commutateur est de type normalement ouvert, ce qui permet d'obtenir des performances NFC optimales en mode carte et lecteur. Sa fermeture est déclenchée lorsqu'un dispositif de charge WLC-P est détecté au travers des échanges de données pour démarrer la charge de la batterie.

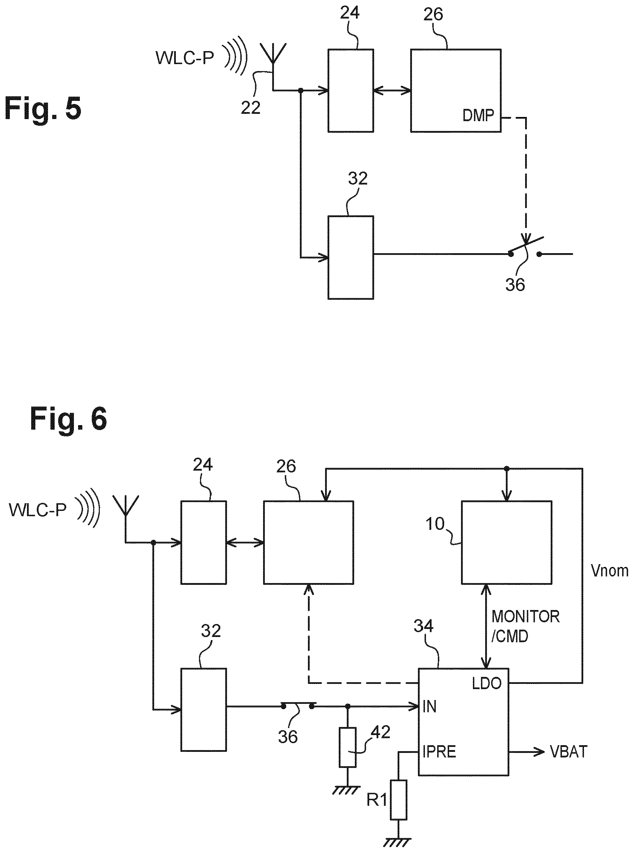

Les figures 5 à 7 illustrent différentes phases de fonctionnement d'un dispositif 1 tel que décrit ci-dessus, en présence d'un champ généré par un dispositif chargeur WLC-P capté par l'antenne 22. Ces figures reprennent, pour partie, certains éléments de l'architecture décrite plus haut en fonction des circuits utilisés dans les différentes situations.

La figure 5 illustre, de façon schématique, un état de l'architecture illustrée en figure 4.

Cette figure correspond à l'état 1 (State 1, figure 3) dans lequel la batterie est éteinte ou n'est pas suffisamment chargée pour opérer la moindre alimentation des circuits. Par exemple, la batterie présente, à ses bornes, une tension inférieure à 2,8 volts.

Dans cet état, le microcontrôleur 10 est dans un mode basse consommation en étant alimenté par le régulateur linéaire et le contrôleur NFC 26 est alimenté par le champ via le circuit 32.

Le contrôleur 26 émule un fonctionnement d'étiquette (tag) et envoie un message WLC_CAP ne supportant que le mode statique afin de d'amorcer une précharge lorsqu'un dispositif chargeur WLC-P est à portée.

Si le commutateur 36 est de type normalement ouvert, le contrôleur 26 en provoque la fermeture par un changement d'état du signal DMP. Si le commutateur 36 est de type normalement fermé, l'état du signal DMP n'est pas modifié.

La figure 6 illustre, de façon schématique, un autre état de l'architecture illustrée en figure 4.

Cette figure correspond à l'état 2 (State 2) de précharge dans lequel la batterie 14 ne peut pas supporter de charge rapide par le dispositif chargeur 34. Cela correspond, par exemple, à un état dans lequel la batterie 14 présente, à ses bornes, une tension inférieure à la tension VPRE (par exemple, inférieure à 3,0 volts).

Dans cet état, le dispositif chargeur WLC-P envoie un niveau de charge statique, c'est-à-dire un niveau de champ par défaut pour un dispositif ayant communiqué un message WLC_CAP demandant un chargement en mode statique. La batterie commence à être rechargée par le champ. Le courant de charge de la batterie est limité au niveau IPRE grâce à la résistance R1 qui est activée.

Le microcontrôleur 10 peut commencer à être alimenté par la batterie à travers le chargeur 34 quand le niveau de la batterie est suffisant, le régulateur LDO interne au chargeur 34 fournissant la tension Vnom (par exemple, 3,0 volts). Le microcontrôleur 10 peut alors commencer à communiquer avec le chargeur 34 pour surveiller (MONITOR) le niveau de charge de la batterie et le fonctionnent du chargeur (signaux BATMS et CHG) et pour commander (CMD) le chargeur (signaux BAMTS-EN, CEN, SD et W-U).

De préférence, le contrôleur NFC 26 commence à être alimenté par la tension Vnom, donc par la batterie, dès que son niveau de charge est suffisamment élevé, (supérieur à un seuil). Un avantage est que, si l'état du microcontrôleur 10, change (besoin de communication par exemple) et par conséquent la consommation en courant change, cela n'affectera pas le niveau du champ rayonné par le dispositif chargeur WLC-P. Il n'y a alors pas de risque de déclencher un mécanisme dit de "détection d'objet étranger" du côté dispositif chargeur. Dans cet état, le chargeur de batterie fournit un courant constant de charge de la batterie, tiré du champ par la tension, VIN et l'énergie requise par le système est tiré de la batterie via les sorties d'alimentation Vsys et LDO.

De préférence, tant que le niveau de charge n'est pas suffisant, le contrôleur 26 reste en mode statique et ne peut commuter vers un mode lecteur. Pour ce faire, on prévoit de préférence une liaison directe (pointillés en figure 6) entre le chargeur 34 et le contrôleur 26 pour permettre au chargeur 34 d'indiquer au contrôleur 26 quand le niveau de charge devient suffisant. De même, de préférence, tant que le niveau de charge n'est pas suffisant, le microcontrôleur 10 reste en mode statique (consommation limitée).

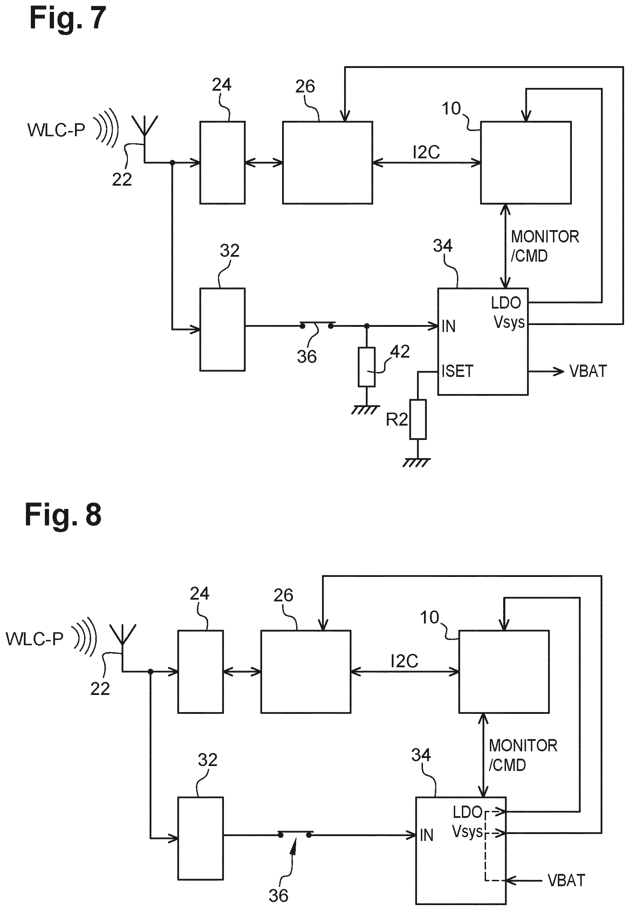

La figure 7 illustre, de façon schématique, un autre état de l'architecture illustrée en figure 4.

Cette figure correspond à l'état 3 (State 3) de charge rapide dans lequel le dispositif chargeur WLC-P peut fournir une puissance suffisant pour charger la batterie 14 jusqu'à son maximum VFLOAD. Cela correspond, par exemple, à un état dans lequel la batterie présente, à ses bornes, une tension comprise entre le niveau de précharge VPRE et sa tension maximale VFLOAD.

Dans cet état, le dispositif chargeur WLC-P peut se placer dans un niveau négocié avec le récepteur WLC-L (le dispositif 1). Pour cela, le microcontrôleur 10 commande au contrôleur NFC d'envoyer un message WLC_CAP au dispositif WLC-P pour lui communiquer la capacité de charge de la batterie. Un des champs du message WLC_CAP indique une demande de basculer en mode négocié. La batterie est alors alimentée par le champ. La surveillance du champ est disponible au niveau du microcontrôleur 10 (de préférence, le microcontrôleur 10 est alimenté par la tension Vnom et le contrôleur NFC 26 est alimenté par la tension Vsys).

En variante, dès que le niveau de charge est suffisant pour que le contrôleur NFC et le microcontrôleur soient alimentés, le microcontrôleur surveille la puissance reçue. Il génère alors un signal de commande pour le chargeur 34 pour réguler le courant de chargement. Cela permet de maximiser la consommation de la puissance reçue. En d'autres termes, cela correspond à adapter la puissance disponible générée par le dispositif chargeur WLC-P au courant prélevé par la batterie pour sa recharge.

La figure 8 illustre, de façon schématique, un autre mode de fonctionnement d'un dispositif selon l'architecture de la figure 4.

Cette figure illustre un état dans lequel le dispositif 1 établit, pendant le chargement de la batterie à partir d'une dispositif chargeur WLC-P, une communication selon le standard WLC avec le dispositif chargeur, c'est-à-dire, en utilisant le protocole WLC tel que défini dans le NFC Forum.

Dans ce mode de fonctionnement, le dispositif chargeur se met, pour permettre la communication, dans un niveau de champ statique. En d'autres termes, il réduit le champ généré mais de l'énergie est néanmoins prélevée par le chargeur 34 pour poursuivre la charge de la batterie 14. Cependant, les deux résistances R1 et R2 sont désactivées car elles ne sont pas utiles. En effet, le niveau de charge de la batterie est, dans une telle situation, suffisant de sorte que la résistance qui serait activée serait la résistance R2, mais elle n'est pas utile dans la mesure où la puissance du champ rayonné par le dispositif chargeur est contrôlée par ce dernier.

Dans ce mode de fonctionnement, le microcontrôleur 10 et le contrôleur NFC 26 sont alimentés par la batterie. La communication elle-même utilise le contrôleur NFC 26 et le microcontrôleur 10.

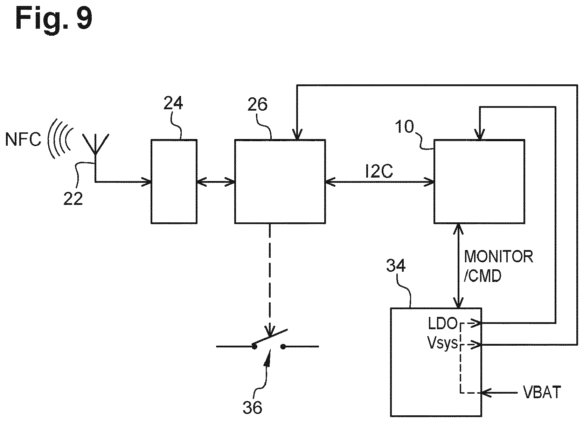

La figure 9 illustre, de façon schématique, un autre mode de fonctionnement d'un dispositif selon l'architecture de la figure 4.

Cette figure illustre un état dans lequel le dispositif 1 est utilisé en tant de dispositif NFC en mode lecteur, c'est-à-dire pour générer un champ et pour communiquer avec une étiquette (tag) NFC externe.

Dans cet état, dit de mode NFC Tx, le contrôleur 26 provoque l'ouverture du commutateur 36 de façon à déconnecter les circuits de la branche de recharge en aval du commutateur 36. Le dispositif 1 génère un champ (via le contrôleur NFC 24 et l'antenne 22) pour communiquer avec une étiquette NFC externe. Le contrôleur NFC 26 et le microcontrôleur 10 sont alimentés par la batterie.

De préférence, selon un autre mode de réalisation dans lequel le circuit de récupération d'énergie 32 est constitué d'éléments de redressement de type diodes, les capacités parasites des diodes sont prises en compte lors du dimensionnement du circuit d'adaptation 24.

Le fonctionnement en mode lecteur NFC en pour le reste usuel pour ce qui est de la communication.

L'architecture décrite supporte différents modes de fonctionnement, en particulier selon que le commutateur 36 est de type normalement ouvert ou normalement fermé et selon que le contrôleur NFC 36 est alimenté.

Selon un mode de réalisation où le commutateur 36 est de type normalement ouvert, le chemin de charge ne perturbe pas le fonctionnement du dispositif en mode de communication NFC (à l'adaptation près en raison du circuit de récupération d'énergie).

Quand le contrôleur 26 détecte que le champ est généré par un dispositif chargeur WLC-P, il provoque la fermeture du commutateur 36 afin de connecter le chargeur 34 au circuit de récupération d'énergie. Comme mentionné plus haut, le contrôleur 26 émule un fonctionnement d'étiquette (tag) et envoie un message WLC_CAP ne supportant que le mode statique.

Typiquement, le processus est le suivant. Le lecteur ou chargeur détectant un tag (le dispositif 1 émule un tag) réalise une procédure anticollision selon la norme ISO14443/EMVCo contactless ou selon le NFC Forum. Ensuite, le lecteur envoie son identifiant d'application (Application Identifier - AID) qui précise l'application supportée par le lecteur, par exemple "Paiement", "Transport" ou "NFC Forum". Ces identifiants sont définis dans la norme ISO7816-4. Par exemple, si l'identifiant correspond au code normalisé D2760000850101 (NDEF Tag Application), le dispositif 1 présente le message NDEF qu'il désire selon l'échange souhaité (un message WLC-CAP dans le cas où il veut se charger).

Dans les états 1 et 2 (figure 3), le dispositif 1 émulera un tag NDEF WLC_CAP dans le cas où un lecteur envoie un Identifiant d'application conforme au NFC Forum. Dans l'état 3, le dispositif 1 est complètement fonctionnel. Le dispositif 1 peut donc envoyer un message NDEF plus complexe, incluant, par exemple, un message WLC_CAP, une demande d'appariement (pairing) en Wi-Fi ou en Bluetooth), une carte virtuelle (vCARD), etc. en fonction de ce que fait l'utilisateur.

Selon un mode de réalisation où le commutateur 36 est normalement fermé, le fonctionnement par défaut est une recharge de la batterie. Le contrôleur 26 en provoque alors l'ouverture pour procéder à des communications NFC. De telles communications s'établissent, de façon usuelle, soit en mode lecteur en prélevant l'énergie sur la batterie, soit en mode carte en prélevant l'énergie sur le champ dans lequel le dispositif 1 se trouve.

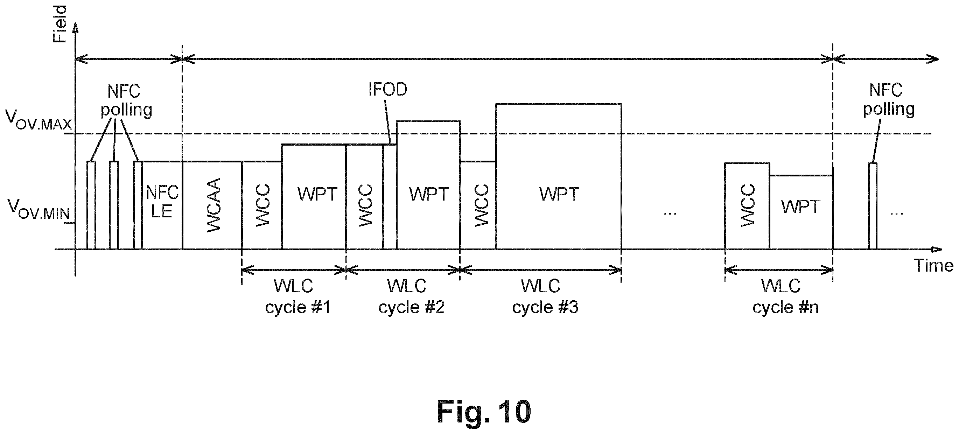

La figure 10 est un chronogramme illustrant le fonctionnement d'un dispositif de charge WLC-P en présence d'un dispositif à charger WLC-L dans son champ.

Ce chronogramme représente un exemple de puissance du champ (Field) en fonction du temps (Time).

Au repos, le dispositif de charge émet périodiquement des salves de champ (NFC polling). Lorsqu'il détecte la présence d'un objet dans son champ, il entame une procédure d'anticollision (NFC LE).

Puis, dans une phase d'activation initiale (WCCA - Wireless Charging Control Activation), comme mentionné plus haut, le lecteur émet son identifiant d'application et le dispositif 1, émulant un tag, émet un message NDEF WLC_CAP qui est lu par le lecteur.

Le chargement sans fil débute alors et comporte une succession de n cycles de charge (WLC cycle#l, WLC cycle#2, WLC cycle#3, ..., WLC cycle#n) Chaque cycle de charge comporte une phase de commande (WCC - Wireless Charging Control) suivie d'une phase de transfert d'énergie (WPT - Wireless Power Transfer). En fonction du mode (statique ou négocié) contenu dans le message WLC_CAP émis par le dispositif 1 pendant une phase WCC, la puissance du champ émis par le lecteur pendant la phase WPT de transfert d'énergie est plus ou moins importante. En particulier, en mode négocié, la tension dépasse un seuil maximal Vov.max tandis qu'en mode statique, la tension reste comprise entre un seuil minimal Vov.min et le seuil Vov.max. Le cas échéant, en fin de phase de transfert, le lecteur intercale avant la prochaine phase de commande WCC, une phase IFOD de détection d'objet étranger.

Une fois le chargement terminé (fin du nième cycle), le lecteur se remet en mode interrogation (polling).

Quel que soit le mode de réalisation, on prévoit de préférence que, en mode de recharge de la batterie, le contrôleur 26 soit commuté en mode veille pendant les phases de recharge. En effet, selon le protocole WLC, le dispositif chargeur émet des trames de recharge successives séparées par des trames d'échange de commandes permettant d'ajuster la puissance du champ. Le contrôleur 26 peut alors être placé en mode veille à chaque fin de trame d'échange de commande.

Cela revient à dire qu'à la fin de l'envoi d'un message WLC_CAP en mode statique ou d'un message WLC_CTL en mode négocié, à destination du dispositif chargeur, le contrôleur NFC 26 se met en mode veille (Stand-By) pour réduire la consommation d'énergie et augmenter le rendement de la recharge.

Pendant la phase de recharge, y compris en étant en mode veille, le contrôleur NFC (ou le microcontrôleur 10) surveille néanmoins le champ reçu, afin de détecter une fin de cycle de charge et le besoin de présenter un nouveau message WLC_CAP ou WLC_CTL. En cas de transition dans le niveau de champ reçu, si le champ descend en dessous d'un seuil personnalisé (choisi en fonction des caractéristiques du dispositif 1), le contrôleur NFC se réveille et :
- soit c'est la fin de la phase de recharge et le début d'une phase de communication : le contrôleur NFC effectue la communication pour continuer ensuite le protocole de rechargement ;
- soit, il n'y pas de champ WLC-P détecté. On sort du processus de recharge. Cela correspond au cas où soit le dispositif 1 n'est plus à porter du dispositif WLC-P, soit le dispositif WLC-P a arrêté d'émettre un champ.

Le tableau 1 qui suit résume un exemple des niveaux de tension LDO et Vsys (figure 4) en fonction d'un seuil Vth de valeur de la tension VIN et du niveau de la tension VBAT. A titre d'exemple particulier, la valeur V_PRE vaut 3 volts, la valeur V_LOW vaut 2,8 volts et la valeur Vth vaut 3,9 volts.

**[Table 1]**

| VIN | VBAT | LDO | Vsys |
|---|---|---|---|
| VIN > Vth | VBAT > V_PRE | 3V (de VIN) | VIN |
| VIN > Vth | V_LOW <VBAT < V_PRE | 3V (de VIN) | VIN |
| VIN > Vth | VBAT < V_LOW | 3V (de VIN) | VIN |
| VIN < Vth | VBAT > V_PRE | 3V (de VBAT) | VBAT |
| VIN < Vth | V_LOW <VBAT < V_PRE | VBAT (régulateur en mode suiveur) | VBAT |
| VIN < Vth | VBAT < V_LOW | 0 (OFF) | 0 (OFF) |

En variante, lorsque la tension VIN est supérieure à Vth et que la tension VBAT est supérieure à V_PRE (première ligne du tableau), la tension Vsys est fournie par la batterie Vsys = VBAT et le régulateur LDO tire son énergie de VBAT au lieu de VIN.

Un avantage des modes de réalisation décrits est qu'ils permettent de mutualiser l'antenne, et préférentiellement le circuit de récupération d'énergie pour un fonctionnement en communication NFC et en recharge NFC.

Un autre avantage des modes de réalisation décrits est qu'ils sont compatibles avec les protocoles définis par le NFC Forum.

Divers modes de réalisation et variantes ont été décrits. La personne du métier comprendra que certaines caractéristiques de ces modes de réalisation peuvent être combinées et d'autres variantes apparaîtront à la personne du métier.

Enfin, la mise en oeuvre pratique des modes de réalisation et variantes décrits est à la portée de l'homme du métier à partir des indications fonctionnelles données ci-dessus.

## Revendications

1. Dispositif comprenant :
un contrôleur NFC (26) ;
un microcontrôleur (10) ;
un circuit chargeur (34) d'une batterie externe ;
un dispositif de récupération d'énergie (32) ;
une antenne (22) ; et
un commutateur (36), commandable par le contrôleur NFC (26), couplant le dispositif de récupération d'énergie (32) au circuit chargeur (34),
dans lequel le microcontrôleur (10) est configuré pour générer un signal de commande à destination du circuit chargeur (34) pour réguler le courant de charge.

2. Procédé d'utilisation d'un dispositif comprenant :
un contrôleur NFC (26) ;
un microcontrôleur (10) ;
un circuit chargeur (34) d'une batterie externe ;
un dispositif de récupération d'énergie (32) ;
une antenne (22) ; et
un commutateur (36) couplant le dispositif de récupération d'énergie (32) au circuit chargeur (34),
dans lequel le commutateur (36) est commandé par le contrôleur NFC (26), le microcontrôleur (10) étant configuré pour générer un signal de commande à destination du circuit chargeur (34) pour réguler le courant de charge.

3. Dispositif selon la revendication 1 ou procédé selon la revendication 2, dans lequel ledit courant de charge est ajusté sur la base de l'énergie disponible du champ.

4. Dispositif selon la revendication 1 ou 3, ou procédé selon la revendication 2 ou 3, dans lequel ledit commutateur (36) est dans un état ouvert pendant des communications NFC en mode lecteur ou en mode carte.

5. Dispositif selon la revendication 1, 3 ou 4, ou procédé selon l'une quelconque des revendications 2 à 4, dans lequel ledit commutateur (36) est dans un état fermé pendant des cycles de recharge sans fil (WLC).

6. Dispositif selon l'une quelconque des revendications 1, 3 à 5, ou procédé selon l'une quelconque des revendications 2 à 5, dans lequel, en présence d'un champ émis par un dispositif chargeur externe (4), au moins le contrôleur NFC (26) et le circuit chargeur (34) sont alimentés par le champ.

7. Dispositif ou procédé selon la revendication 6, dans lequel le microcontrôleur (10) est également alimenté par le champ.

8. Dispositif selon l'une quelconque des revendications 1, 3 à 7, ou procédé selon l'une quelconque des revendications 2 à 7, dans lequel, en présence d'un champ émis par un dispositif chargeur externe (4), tant que le niveau de charge de la batterie (14) est inférieur à un seuil, le contrôleur NFC et/ou le microcontrôleur ne peuvent pas commuter en mode lecteur NFC.

9. Dispositif selon l'une quelconque des revendications 1, 3 à 8, ou procédé selon l'une quelconque des revendications 2 à 8, dans lequel, en présence d'un champ émis par un dispositif chargeur externe (4), lorsque le niveau de charge de la batterie est supérieur à un seuil, le microcontrôleur (10) et/ou le contrôleur NFC est alimenté par la batterie.

10. Dispositif selon l'une quelconque des revendications 1, 3 à 9, ou procédé selon l'une quelconque des revendications 2 à 9, dans lequel, en présence d'un champ émis par un dispositif chargeur externe (4), le contrôleur NFC (26) entre en mode de veille pendant des cycles de charge.

11. Dispositif selon l'une quelconque des revendications 1, 3 à 10, ou procédé selon l'une quelconque des revendications 2 à 10, dans lequel, en présence d'un champ émis par un dispositif chargeur externe (4), le microcontrôleur (10) entre en mode de veille pendant des cycles de charge.

12. Dispositif selon l'une quelconque des revendications 1, 3 à 11, ou procédé selon l'une quelconque des revendications 2 à 11, dans lequel, en présence d'un champ émis par un dispositif chargeur externe (4), le microcontrôleur (10) surveille la puissance disponible à l'entrée du circuit chargeur (34).

13. Dispositif selon l'une quelconque des revendications 1, 3 à 12, ou procédé selon l'une quelconque des revendications 2 à 12, dans lequel le commutateur (36) est de type normalement ouvert.

14. Dispositif ou procédé selon la revendication 13, dans lequel lorsque le contrôleur NFC (26) détecte un dispositif chargeur sans fil externe (4) émettant un champ, il ferme le commutateur (36) couplant le dispositif de récupération d'énergie (32) au circuit chargeur (34).

15. Dispositif selon l'une quelconque des revendications 1, 3 à 12, ou procédé selon l'une quelconque des revendications 2 à 12, dans lequel le commutateur (36) est de type normalement fermé.
